Europäisches Patentamt

European Patent Office

Office européen des brevets

(19)

(11) Veröffentlichungsnummer: **0 004 855**
**B1**

(12) **EUROPÄISCHE PATENTSCHRIFT**

(45) Veröffentlichungstag der Patentschrift: **30.06.82**

(51) Int. Cl.³: **G 06 K 9/36, H 04 N 1/40**

(21) Anmeldenummer: **79100381.7**

(22) Anmeldetag: **09.02.79**

(54) Schaltungsanordnung zum Aufbereiten eines abgetasteten Musters.

(30) Priorität: **18.04.78 DE 2816839**

(43) Veröffentlichungstag der Anmeldung:
**31.10.79 Patentblatt 79/22**

(45) Bekanntmachung des Hinweises auf die Patenterteilung:
**30.06.82 Patentblatt 82/26**

(84) Benannte Vertragsstaaten:
**BE CH FR GB IT NL**

(56) Entgegenhaltungen:
**DE - A - 2 111 232**
**DE - B - 1 205 743**
**GB - A - 1 311 541**
**US - A - 3 339 177**
**US - A - 3 800 079**
**US - A - 3 964 022**
**US - A - 4 010 446**

(73) Patentinhaber: **COMPUTER GESELLSCHAFT
KONSTANZ MBH
Max-Strohmeyer-Strasse 116
D-7750 Konstanz (DE)**

(72) Erfinder: **Kochert, Wilfried
Gaussweg 14
D-7750 Konstanz (DE)**

(74) Vertreter: **Mehl, Ernst, Dipl.-Ing.
Postfach 22 01 76
D-8000 München 22 (DE)**

## Schaltungsanordnung zum Aufbereiten eines abgetasteten Musters

Die Erfindung bezieht sich auf eine Schaltungsanordnung zum Aufbereiten eines abgetasteten Musters in einer Einrichtung zur maschinellen Zeichenerkennung gemäß dem Oberbegriff des Hauptanspruches.

Wenn ein abzutastendes Muster beim Vorbeilaufen eines Aufzeichnungsträgers an einer Abtasteinheit oder beim Vorbeiführen einer Abtasteinheit an einem stillstehenden Aufzeichnungsträger durch eine in der Abtasteinheit angeordnete Fotodiodenmatrix in ein Bildsignal umgewandelt wird, dann entspricht das digitalisierte Bildsignal nicht in allen Elementen eindeutig der Schwarz-Weiß-Verteilung des abzutastenden Musters. Auch dann, wenn der Schwellenwert für die Digitalisierung des Bildsignals günstig gewählt ist, treten Signalverfälschungen auf. Diese ergeben sich daraus, daß die einzelnen Fotodioden des fotoelektrischen Wandlers einen relativ hohen Toleranzbereich bezüglich ihrer Empfindlichkeit aufweisen. Das bedeutet, daß die den einzelnen Musterelementen zuzuordnenden optischen Signale mit großen unterschiedlichen Empfindlichkeiten abgetastet werden. Bei schwächeren Mustern kann dies zu einer teilweisen Durchlöcherung führen, während umgekehrt, "fette" Abtastmuster bei zu niedrig eingestellten Schwellenwerten noch dicker erscheinen können.

Bei den bisher bekannten Zeichenerkennungsgeräten wurden zweidimensionale Fotodiodenmatrizen, bestehend aus mehreren Zeilen und Spalten, kaum (Ausnahme: US—A—3 964 022) verwendet. Wegen der bisher noch nicht soweit fortgeschrittenen Technologie der Integration elektronischer Bauelemente wurden stattdessen bisher vor allem Fotodiodenzeilen mit einem eingebauten Abfrageschieberegister eingesetzt. Verglichen mit einer solchen Fotodiodenmatrix besitzen diese Fotodiodenzeilen nur verhältnismäßig wenige fotoelektrische Elemente. Deshalb ist es bekannt, die auch hier auftretenden Toleranzen der einzelnen Fotodioden bezüglich ihrer Empfindlichkeit und die Signalabweichungen bei der Abtastung eines Zeichens durch eine Korrektur jedes einzelnen Abtastelements auszugleichen. Bei einem solchen Ausgleich wird ein Eichnormal mit einem eindeutigen Weißuntergrund abgetastet und aus dem Abtastergebnis jeder einzelnen Fotodiode ein für sie spezifischer Korrekturwert ermittelt und gespeichert. Bei der Abtastung von Mustern werden dann diese Korrekturwerte für die einzelnen Fotodioden dazu verwendet, die Toleranzabweichungen der einzelnen Fotodioden in ihrer Empfindlichkeit durch Korrektur des von der Fotodiodenzeile abgegebenen Bitsignals zu eliminieren. Es ist ohne weiteres vorstellbar, daß eine solche Korrektur der von den einzelnen Fotodioden abgegebenen Signalelemente bei einer

größeren Fotodiodenmatrix, wie sie heute handelsüblich ist, sehr aufwendig wäre, zumal berücksichtigt werden muß, daß die Empfindlichkeit des elektronischen Bauteils bzw. seiner einzelnen Elemente auch von der Alterung abhängig ist.

Da sich im vorgegebenen Fall also eine solche Korrektur der einzelnen Werte der Fotodioden als unzweckmäßig erweist, muß nach anderen Möglichkeiten gesucht werden, diese Störfaktoren auszugleichen. Nun ist est bekanntlich ein Ziel der Vorverarbeitung eines abgetasteten Zeichens bzw. dessen diesem entsprechenden digitalisierten Bildsignals vor der eigentlichen Klassifizierung eine gewisse Normalisierung des Abtastmusters herbeizuführen. Denn der eigentliche Klassifizierungsvorgang ist umso einfacher, je ähnlicher die Abtastmuster einander sind, die einer bestimmten Bedeutungsklasse zuzuordnen sind. In diesem Zusammenhang sind z.B. Verfahren der Strichbreitennormalisierung bekannt, bei denen zur Korrektur des Abtastergebnisses für ein Abtastelement eines Bildmusters auch der festgestellte Zustand in der Umgebung dieses Abtastelementes mit herangezogen wird. Bei einer entsprechenden Bewertung der Umgebung eines Abtastelementes können so z.B. ausgefranste Konturen eines Abtastmusters korrigiert werden. Diese Korrekturverfahren haben jedoch den Nachteil, daß es bei ihnen immer unsicher ist, welchen Schwellenwert man für die Korrektur anzusetzen hat, wenn man tatsächlich nur Lücken füllen möchte, bzw. wenn eine zu niedrig angesetzte Schwelle korrigiert werden soll, d.h. ein Schwarzelement ungewertet werden soll.

Weiterhin ist es bei der maschinellen Zeichenerkennung bekannt, statt solcher Korrekturverfahren in der Aufbereitungsphase ein Zeichen mehrfach abzutasten. Jedes dieser Abtastmuster wird dann digitalisiert und weiteren notwendigen Verarbeitungsschritten vor der Klassifizierung, z.B. einer Segmentierung, unterworfen. Anschließend kann man versuchen, jedes einzelne dieser Abtastmuster einer bestimmten Bedeutungsklasse zuzuordnen. Für die endgültige Zuordnung, d.h. die Klassifizierung des abgetasteten Zeichens wird dann das Abtastmuster ausgewählt, das für eine bestimmte Bedeutungsklasse die größte Wahrscheinlichkeit bietet. Dieses Vorgehen bedeutet aber einen mehrfachen Klassifizierungsversuch, das Zeichenerkennungsverfahren ist dementsprechend aufwendig und langsam.

Aus der DE—AS—1 205 743 ist ferner ein Verfahren zur maschinellen Zeichenerkennung bekannt, bei der ein jeweils aktuelles Bildmuster mit einem dazu lageverschobenen Bildmuster verglichen und in einer Zähleinrichtung die Größe der Übereinstimmung beider Bildsignale in Form eines Zählwertes ermittelt wird, der die weitere Verarbeitung der Bildsignale steuert.

Der vorliegenden Erfindung liegt nun die Aufgabe zugrunde, eine Schaltungsanordnung der eingangs genannten Art in der Weise zu verbessern, daß, insbesondere unter Berücksichtigung der Fotodiodentoleranzen und der unterschiedlichen Strichstärken bei den einzelnen Zeichen, bei vertretbarem Aufwand eine im Hinblick auf eine sichere Zeichenerkennung ausreichende Zeichenaufbereitung möglich ist.

Diese Aufgabe wird erfindungsgemäß mit den im Kennzeichen des Hauptanspruches beschriebenen Merkmalen gelöst. Bei dieser Lösung wird die Tatsache ausgenutzt, daß auch bei einem einzigen Abtastvorgang wegen der geringen Trägheit moderner elektronischer Bauelemente auf einer solchen Fotodiodenmatrix zeitlich nacheinander ein verschobenes Momentbild des Abtastmusters auftritt. Aufgrund der Toleranzen der einzelnen Fotodioden werden die Elemente des abgetasteten Musters in den verschiedenen Lagen unterschiedlich bewertet, sid in dem einen Momentanbild also als Schwarz-, in einem anderen Momentanbild als Weißelemente wiedergegeben. Die Erfindung nützt diese Möglichkeit moderner elektronischer Bauelemente aus, um während eines einzigen Abtastvorganges verschiedene Momentanlagen des Bildmusters auszuwerten. Bei der Auswertung werden diese—bildlich gesprochen—übereinandergelegt und dann die Unterschiede der einzelnen Abtastergebnisse durch logische Verknüpfung der Zustände der einzelnen einander entsprechenden Abtastelemente korrigiert. Diese Korrektur wird so durchgeführt, daß bei schwachen Zeichen mit dünnen Strichstärken jeweils die schwarzen Bildelemente, bei kräftigen Zeichen mit breiten Strichstärken jedoch die weißen Bildelemente disjunktiv zusammengefaßt werden Die Schaltungsanordnung nutzt also die Eigenschaft eines gesamten Zeichens, es wird zwischen "fetten und "schwachen" unabhängig vom Bedeutungsgehalt unterschieden, aus, um Uniterschiede in den einzelnen momentanen Bildmustern entweder ein Zeichen verdünnend oder verstärkend auszugleichen Diese Korrelation einzelner momentaner Abtastergebnisse ist bei einer sehr umfangreichen Fotodiodenmatrix mit z.B. 1024 Bitstellen für ein komplettes Abtastmuster wesentlich weniger aufwendig als die Ständig neue Berechnung von Korrekturwerten für jede einzelne Fotodiode und in bezug auf die Erkennungssicherheit günstiger, als ein lediglich die Umgebung eines Abtastelementes berücksichtigendes Verfahren zur Normalisierung eines Abtastmusters. Weiterbildungen der Erfindung sind in Unteransprüchen beschrieben.

Nachfolgend wird ein Ausführungsbeispiel der Erfindung anhand der Zeichnung näher erläutert. Dabei zeigt:

Fig. 1 ein Blockschaltbild einer erfindungsgemäßen Schaltungsanordnung zum Aufbereiten eines abgetasteten Musters,

Fig. 2 bevorzugte Ausführungsbeispiele für eine Vergleicher-, eine Zähl- und eine Decodierschaltung,

Fig. 3 bis Fig. 5 die richtungsabhängig unterschiedliche Bewertung eines einfachen Bildmusters und

Fig. 6 anhand eines Flächendiagramms die unterschiedliche Auswertung der verschiedenen möglichen Lagekombinationen aufeinanderfolgender unterschiedlicher Bildmuster.

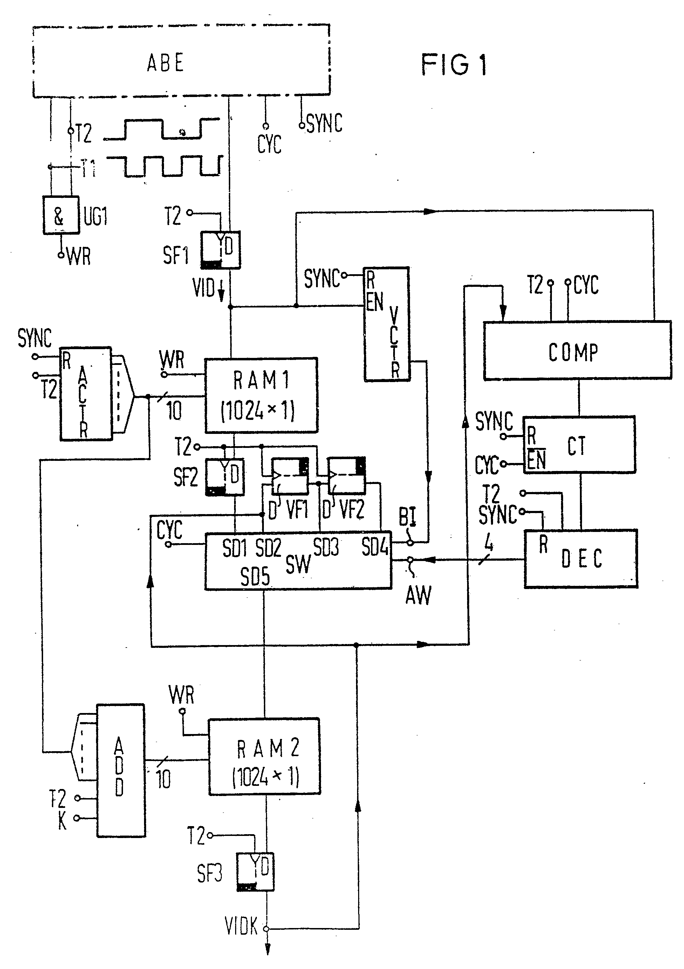

Das in Fig. 1 dargestellte Blockschaltbild für eine Schaltungsanordnung zum Aufbereiten eines abgetasteten Rasters zeigt eine Abtasteinheit ABE, die nur mit strichpunktierten Linien dargestellt ist, um anzudeuten, daß diese an sich nicht mehr ein Teil dieser Schaltungsanordnung ist. Von ihr gehen jedoch all die Signale aus, due für die Schaltungsanordnung von Bedeutung sind. So liefert sie neben den abgetasteten Bildsignalen VID eine Reihe von Steuersignalen. Das sind vor allem zwei Takte T1 bzw. T2, deren Taktverhältnisse dargestellt sind. Diese laufen synchron zum Videosignal VID und dienen vor allem, wie noch zu erläutern sein wird, der zeitlichen Synchronisierung aller Schaltvorgänge. Die Abtasteinheit ABE liefert darüber hinaus ein Normiersignal SYNC. Dieses Signal wird während eines Taktes T2 immer dann abgegeben, wenn von der Abtasteinheit ABE ein komplettes Bildmuster abgegeben ist. Dieses Signal dient dann dazu, all die Schaltungen auf einen definierten Anfangswert zurückzustellen, deren Schaltzustand sich fortlaufend bei der Übertragung eines Bildmusters ändert. Schließlich gibt die Abtasteinheit ABE auch noch ein Ausblendsignal CYC ab, das während der Übertragung der linken bzw. rechten Randspalten eines Bildmusters abgegeben wird, damit diese bei der Aufbereitung der Bildmuster unberücksichtigt bleiben. An dieser Stelle ist noch hinzuzufügen, daß die beiden Takte T1 bzw. T2 über ein erstes UND-Gleid UG1 zu einem Weiteren Steuersignal, einem Schreibsignal WR verknüpft werden, dessen Verwendung noch erläutert wird.

Das von der Abtasteinheit ABE abgegebene Bildsignal VID wird einem ersten Synchronisier-Flip-Flop SF1 zugeführt, das durch den langsamen zweiten Takt T2 vorbereitet wird, Dieses Synchronisierte Videosignal VID wird zunächst dem Dateneingang eines ersten Bildspeichers RAM1 zugeführt. Dessen Speicherkapazität entspricht einem kompletten Bildmuster, im vorliegenden Bei spiel also 1024×1 Bit, wobei davon ausgegangen ist, daß ein Sensorfeld in der Abtasteinheit ABE aus 16 Spalten und 64 Zeilen besteht, ein vollständiges Bildsignal also 1024 Bit entspricht. Dieses Bildsignal VID wird aus der Abtasteinheit ABE zeilenweise und bitseriell übertragen. Es wird in den ersten Bildspeicher RAM1 in dieser Form, gesteuert durch das Schreibsignal WR, bitseriell übernommen. Für die Adressenauswahl des ersten Bildspeichers RAM1 ist ein Adresszähler ACTR vorgesehen. Dieser wird mit dem zweiten Takt T2 hochgezählt und dann jeweils am Ende einer Bildübertragung durch das Normiersignal SYNC zurückgestellt.

An den Datenausgang des ersten Bildspeichers RAM1 ist ein zweites Synchronisierflipflop SF2 angeschlossen, das ebenfalls durch den zweiten Takt T2 ausgesteuert wird. Es ist mit seinem Ausgang an einen ersten Dateneingang SD1 eines Schaltwerkes SW angeschlossen. Dieses Schaltwerk SW weist drei weitere Dateneingänge SD2, SD3 und SD4 auf, deren Bedeutung noch erläutert wird. Außerdem wird ihm als Steuersignal das Ausblendsignal CYC zugeführt. Weiterhin ist es an den Ausgang einer Bildelement-Zähleinrichtung VCTR angeschlossen. Auch diese Zählereinrichtung wird durch das Normiersignal SYNC am Ende einer Bildübertragung zurückgestellt. Sie weist einen Zähleingang EN auf, dem das am Ausgang des ersten Synchronisierflipflop SF1 abgegebene Bildsignal VID zugeführt wird. So zählt dieser Zähler während einer Bildübertragung alle schwarzen Bildelemente und gibt an das Schaltwerk SW als steuersignal ein Schwellensignal BI ab. Dieses Schwellensignal BI ist jeweils dann im Zustand 1, wenn der Zählerstand der Zählereinrichtung VCTR einen vorgegebenen Wert für die Anzahl der Schwarzelemente in einem Bildmuster überschreitet und dieses Bildmuster damit als ein "fettes" Muster kennzeichnet. Das Schaltwerk SW erhält darüber hinaus noch ein weiteres, vier Bit umfassendes Auswahlsignal AW, das von einem noch später zu erläuternden Decodierer DEC abgegeben wird.

An einen Datenausgang SD5 des Schaltwerkes ist ein zweiter Bildspeicher RAM2 angeschlossen. Auch dieser besitzt eine Speicherkapazität für ein komplettes Bildmuster mit 1024×1 Bit. Er wird über einen Adressaddierer ADD adressiert und übernimmt die vom Schaltwerk SW angebotenen Ausgangsdaten, wenn ihm zugleich das Schreibsignal WR zugeführt wird. Der Adressaddierer wird zunächst mit den Ausgangssignalen den Adresszählers ACTR eingestellt. Zum Auslesen des zweiten Bildspeichers RAM2 muß jedoch von der vom Adresszähler ACTR angebotenen Adresse eine Konstante K subtrahiert werden, um—wie noch zu erläutern sein wird—den inhalt dieses zweiten Bildspeichers RAM2 lagesynchron zu den angebotenen Bildsignalen VID auszulesen. Diese Adressensubstitution soll jedoch nur während des Leservorganges aus dem zweiten Bildspeicher RAM2 stattfinden, aus diesem Grund wird dem Adressaddierer ADD ebenfalls der langsame Takt T2 angeboten, dessen Impulspause jeweils einen Lesezyklus zeitlicht festlegt. Die Ausgangsdaten des zweiten Bildspeichers RAM2 werden Schließlich über ein drittes Synchronisierflipflop SF3 am Ausgang der Schaltungsanordnung zur weiteren Verarbeitung als sogenanntes korreliertes Bildsignal VIDk zur weiteren Verarbeitung abgegeben.

Dieses korrelierte Bildsignal VIDk wird zur Verknüpfung mit dem aktuellen Bildsignal VID, das im ersten Bildspeicher RAM1 zwischengespeichert wird, auch dem Schaltwerk SW dreifach angeboten. Das korrelierte Bildsignal VIDk wird dazu dem Schaltwerk SW über seinen zweiten Dateneingang SD2 direkt zugeführt und über zwei in Serie geschaltete Verzögerungsflipflops VF1 bzw. VF2 um je einen Spaltenabstand verzögert, dem dritten und vierten Dateneingang SD3 bzw. SD4 des Schaltwerkes SW zugeführt. Damit wird hier nun auch deutlich, warum die Speicheradresse für den zweiten Bitspeicher RAM2 beim Leservorgang modifiziert wird. Denn damit ist es möglich, dem Schaltwerk lagesynchron zu den aktuellen Bildsignalen VID korrelierte Bildsignale anzubieten. Die Adressenmodifikation ist so gestaltet, daß zusammen mit der Verzögerung der korrelierten Bildsignale VIDk bei einer Relativgeschwindigkeit von Null der Abtasteinheit ABE gegenüber einem abzutastenden Aufzeichnungsträger dem Schaltwerk SW das korrelierte Bildsignal in drei verschiedenen Lagen angeboten wird, von der die mittlere zu dem aktuellen Bildsignal VID lagesynchron ist.

Der Ausgang des dritten Synchronier-Flip-Flops SF3 ist außerdem mit einer Vergleichsschaltung COMP verbunden, die damit ebenfalls das korrelierte Bildsignal VIDk empfängt. In dieser wird das aktuelle Bildsignal VID, das ihr ebenfalls zugeführt wird, mit dem korrelierten Bildsignal VIDk in drei Lagen verglichen und die beste Übereinstimmung ermittelt. Dies wird dadurch erreicht, daß in einer an die Vergleichsschaltung COMP angeschlossenen Zählschaltung CT während einer Bildübertrag für jede der Lagen die Bildelemente mit übereinstimmendem Signalzustand gezählt werden. Dazu muß diese Zählschaltung ebenfalls jeweils zu Beginn einer Ubertragung eines kompletten Bildmusters in einem definierten Ausgangszustand stehen, was mit dem zugeführten Normiersignal SYNC erreicht wird.

Am Ende eines Übertragungsvorganges wird das in der Zählschaltung CT stehende Vergleichsergebnis an einen Decodierer DEC übertragen, der die ihm zugeführte Eingangsgröße in das erwähnte Auswahlsignal AW umsetzt, das dem Schaltwerk zugeführt wird. Dieses Steuersignal definiert damit für das Schaltwerk diejenige Lage des korrelierten Bildsignals VIDk, die mit dem aktuellen Bildsignal VID am besten übereinstimmt. Aufgrund dieses Vegleichsergebnisses, ausgedrückt durch den Zustand des Auswahlsignals AW, verknüpft dann das Schaltwerk SW eines der drei ihm angebotenen korrelierten Bildsignale VIDk mit dem aus dem ersten Bildspeicher RAM1 ausgelesenen aktuellen Bildsignal. Die Art der Verknüpfung hängt dabei von dem dem Schaltwerk SW zugeführten Schwellensignal BI der Bildelement-Zähleinrichtung ab. Der Zustand "Null" dieses Schwellensignals kennzeichnet ein übertragenes Bildmuster mit nur wenigen schwarzen Bildelementen, also ein "schwaches" Zeichen. Das Schaltwerk SW verknüpft in diesem Fall das angebotene aktuelle Bildsignal VID mit dem ausgewählten korrelierten Bildsignal VIDk derart, daß alle schwarzen Bildelemente beider Bildmuster disjunktiv verknüpft werden. Im so neu entstehenden korrelierten Bildsignal wird also ein "schwaches" Bildmuster aufgefüllt. Umgekehrt ist das Schwellensignal Bl der Bildelement-Zähleinrichtung im Zustand "1", wenn ein "fettes" Bildmuster übertragen wird. Das Schwellensignal Bl steuert dann das Schaltwerk SW so, daß nun die weißen Bildelemente der Bildsignale VID bzw. VIDk der ausgewählten Lage miteinander disjunktiv verknüpft werden. Ein "fettes" Bildmuster wird so in gewissem Umfang verdünnt.

Diese Aufbereitung eines abgetasteten Bildmusters berücksichtigt die Tatsache, daß in einer Fotodiodenmatrix, die als fotoelektrischer Wandler in der Abtasteinheit ABE eingesetzt wird, die einzelnen Fotodioden einen relativ hohen Toleranzbereich bezüglich ihrer Empfindlichkeit aufweisen. Daraus ergibt sich, daß die optischen Signale innerhalb der Fotodiodenmatrix mit großer unterschiedlicher Empfindlichkeit abgetastet werden. Schwächere Zeichen können so teilweise sogar durchlöchert werden.

Auch bei einer einmaligen Abtastung eines Aufzeichnungsträgers mit einer bestimmten Relativgeschwindigkeit der Abtasteinheit ABE gegenüber diesem Aufzeichnungsträger ergeben sich auf der Fotodiodenmatrix, also der Sensorfläche der Abtasteinheit, verschiedene Momentaufnahmen mit unterschied-lichen Lagen eines abgetasteten Musters. Bei den unterschliedlichen Empfindlichkeiten der Fotodioden bedeutet dies aber auch scheinbar unterschliedliche Zeichen je nach der Lage, die das optisch abgetastete Zeichen auf der Matrix einnimmt. In der vorstehend beschriebenen Schaltungsanordnung werden verschiedene derartige Lagen, bildlich gesprochen, übereinendergelegt und so Unterschiede in den Einzelnen momentanen Bildmustern ansgeglichen.

Dazu wird das aktuelle Bildsignal VID mit einem in dem zweiten Bildspeicher RAM2 vorliegenden korrelierten Bildsignal VIDk in drei nebeneinanderliegenden Lagen verglichen. Die Lage der größten Übereinstimmung wird durch die Vergleichsschaltung COMP festgestellt. Das im ersten Bildspeicher RAM1 zwischengespeicherte momentane Bildsignal VID kann daraufhin mit dem im zweiten Bildspeicher RAM2 vorliegenden Bildsignal in der Lage der besten Übereinstimmung verknüpft werden. Das Vergleichen des korrelierten Bildsignals VIDk mit dem akutellen Bildsignal VID in drei verschiedenen nebeneinanderliegenden Lagen bietet die Möglichkeit, diese Korrelation unabhängig von einer vorgegebenen Abtastrichtung auf dem Aufzeichnungsträger festzustellen, weil sich die Abtastrichtung auch aus der besten Übereinstimmung des aktuellen Bildsignals VID mit einer der drei Lagen des korrelierten Bildsignals VIDk ergibt. So ist es möglich, Abtastrichtungen von links nach rechts bzw. auch von rechts nach links zuzulassen.

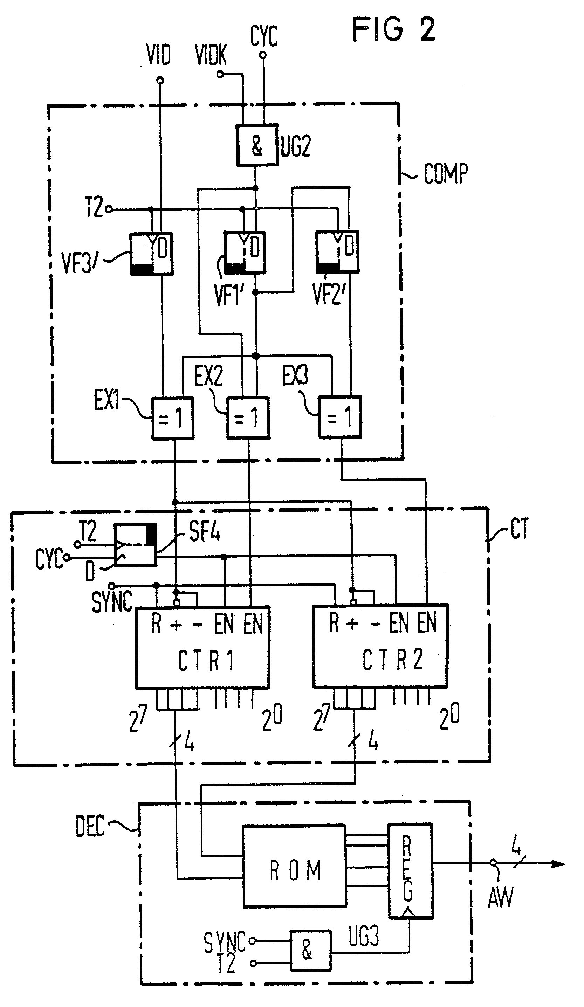

Nun wäre es allerdings bei einem 1024 Bit umfassenden abgetasteten Bildmuster ziemlich aufwendig, ein solches Bildmuster mit drei bereits korrelierten kompletten Bildmustern Vollständig zu vergleichen. Bei üblichen Bildmuster, insbesondere also Schriftzeichen, ist dies auch nicht erforderlich. Bei einer Vielzahl dieser Muster liegt die wesentliche Information bekanntlich in der Kontur des Abgetasteten Zeichens. Wenn man dies ausnutzt, dann wird der Vergleich wesentlich einfacher. Um dies näher zu erläutern, ist in Fig. 2, ein bevorzugtes Ausführungsbeispiel für den Teil der in Fig. 1 dargestellten Schaltungsanordnung dargestellt, mit dem der Vergleich des aktuellen Bildsignals VID mit dem korrelierten Bildsignal VIDk in drei verschiedenen Lagen durchgeführt wird und das Vergleichsergebnis in Form des Auswahlsignals AW dem Schaltwerk SW übergeben wird.

Die in Fig. 2 dargestellte Vergleichsschaltung COMP weist ein zweites UND-Gleid UG2 auf, dessen Eingängen das bitseriell angebotene korrelierte Bildsignal VIDk und das Ausblendsignal CYC zugeführt sind. Diese logische Verknüpfung bedeutet, daß die Randspalten eines übertragenen Bildmusters, hier eines bereits korrelierten Bildmusters bei dem Vergleich mit dem aktuellen Bildsignal VID, das ebenfalls der Vergleichsschaltung COMP zugeführt wird, unberücksichtigt bleiben. Für das so in seinen Rändern beschnittene korrelierte Bildsignal VIDk müssen nun drei, jeweils um einen Spaltabstand seitenverschobene Lagen des korrelierten Bildmusters erzeugt werden. Dazu dienen wiederum zwei Verzögerungsflipflops VF1' bzw. VF2', die hintereinandergeschaltet an den Ausgang des zweiten UND-Gliedes UG2 angeschlossen sind. Das am Ausgang des zweiten UND-Gliedes UG2 direkt abgegebene korrelierte Bildsignal VIDk gehört zum linken Bildmuster, das einmal verzögerte, am Ausgang des ersten Verzögerungsflipflops VF1' auftretende Bildsignal gehört zum mittleren Bildmuster und das am Ausgang des zweiten Verzögerungsflipflops VF2' stehende Bildsignal gehört zum rechten Bildmuster.

Wenn das aktuelle Bildsignal VID nun bei einer Relativgeschwindigkeit von Null zwischen Abtasteinheit ABE und Aufzeichnungsträger lagesynchron zu dem korrelierten Bildsignal VIDk der mittleren Lage sein soll, dann muß auch dieses verzögert werden. Es wird daher einem weiteren Verzögerungsflipflop VF3' zugeführt. Alle diese drei Verzögerungsflipflops werden durch den langsamen Takt T2 in ihrem Zustand gesteuert.

Die Besonderheit des angestrebten Vergleichs besteht nun darin, daß nicht etwa das korrelierte Bildsignal VIDk in allen drei Lagen mit dem aktuellen Bildsignal VID verglichen wird, sondern ein Vergleich der korrelierten Bildmuster der mittleren Lage mit der linken bzw. rechten Lage, sowie der mittleren Lage des korrelierten Bildmusters mit dem aktuellen Bildmuster vorgenommen wird. Dazu dienen drei EXCLUSIV-ODER-Gleider EX1, EX2 und EX3, Je ein Eingang dieser drei EXCLUSIV-ODER-Gleider ist mit dem Ausgang des erstem Verzögerungsflipflops VF1' verbunden. Der zweite Eingang des ersten EXCLUSIV-ODER-Gleides EX1 ist an das das aktuelle Bildsignal VID verzögernde Verzögerungsflipflop VF3' angeschlossen. Das Zweite EXCLUSIV-ODER-Glied EX2 ist mit seinem zweiten Eingang direkt mit dem Ausgang des UND-Gliedes UG2 verbunden und das dritte EXCLUSIV-ODER-Glied EX3 mit dem Ausgang des zweiten Verzögerungsflipflops VF2' verbunden. Da ein EXCLUSIV-ODER-Glied bekanntlich nur dann ein Ausgangssignal "1" führt, wenn seinen beiden Eingängen unterschiedliche Signalzustände angeboten werden, geben die drei Ausgänge des Vergleichers COMP immer dann ein Vergleichssignal "1" ab, wenn die Bildelemente der beiden jeweils miteinander verglichenen Bildmuster unterschiedlich sind. Es ist wohl vorstellbar und wird noch anhand eines Beispieles erläutert, daß dies gerade die Konturen von Bildmustern kennzeichnet, wenn diese zueinander lageverschoben sind. Hier sei noch ergänzt, daß dies für die drei unterschiedlich angebotenen korrelierten Bildsignal VIDk bei eindeutiger Abtastung immer gilt, während dies nach der obigen Definition nur dann der Fall sein kann, wenn zwischen der Abtasteinheit ABE und dem abzutastenden Aufzeichnungsträger eine Relativgeschwindigkeit auftritt.

Diese drei Ausgangssignale der Vergleichsschaltung COMP werden der Zählschaltung CT angeboten. Diese Zählschaltung besitzt zwei Vorwärts-Rückwärts-Zähler CTR1 bzw. CTR2. Der erste der beiden Vorwärts-Rückwärts-Zähler ist mit seinem Zähleingang EN dem Ausgang des zweiten EXCLUSIV-ODER-Gliedes zugeordnet. Er zählt damit jeden Unterschied zwischen den korrelierten Bildmustern der mittigen und linken Lage. Entsprechendes gilt für den zweiten Vorwärts-Rückwärts-Zähler CTR2, der dem dritten EXCLUSIV-ODER-Glied EX3, d.h. den beiden korrelierten Bildmustern der Mitte und der rechten Lage zugeordnet ist. Beide Zähler werden gemeinsam über das ihrem Rücksetzeingang R zugeführte Normiersignal SYNC vor Beginn einer Bildübertragung zurückgestellt. Weiterhin ist ihnen über ein durch den zweiten Takt T2 getaktetes weiteres Synchronisierflipflop SF4 das Ausblendsignal CYC über einen Sperringang EN zugeführt, damit bei der Bildübertragung die Randspalten unberücksichtigt bleiben. Die Zählrichtung beider Zahler wird durch das Ausgangssignal des ersten EXCLUSIV-ODER-Gliedes EX1 festgelegt. Definitionsgemäß sei die Zählrichtung immer dann positiv, wenn dieses Ausgangssignal im Signalzustand "Null" ist. Die umgekehrte Zählrichtung wird durch den zweiten Signalzustand eingestellt. Dies ist in Fig. 2 durch die entsprechende Angabe der Eingänge für die Zählrichtung angedeutet.

Die beiden achtstufigen Vor-Rückwarts-Zähler CTR1 bzw. CTR2 besitzen eine entsprechende Anzahl von Ausgängen, von denen jedoch nur die vier höherwertigen Ausgänge beschaltet sind. Dies berücksichtigt die Tatsache, daß erst ab einer gewissen Schwelle sichere Übereinstimmungen in den ausgewerteten Bildmustern gewährleistet sind, und die Berücksichtigung der niederwertigen Bitstellen den Vergleich verfälschen könnten. Diese insgesamt acht Signalausgänge der Zählschaltung CT sind an den Decodierer DEC angeschlossen. Mit dem jeweiligen Zählerstand der beiden Zähler der Zählschaltung CT wird im Decodierer DEC ein Festwertspeicher ROM adressiert, der eine Kapazität von 256×4 Bit aufweist. Dieser Festwertspeicher hat dementsprechend vier Signalausgänge, die an ein Ausgangsregister REG angeschlossen sind. Der adressierte Speicherinhalt wird in dieses Ausgangsregister REG, durch den langsamen Takt T2 gesteuert, am Ende einer Bildübertragung übernommen. Dies wird durch das Normiersignal SYNC ausgelöst, das mit dem langsamen Takt T2 über ein drittes UND-Glied UG3 verknüpft und dem Takteingang des Ausgangsregisters REG zugeführt ist. Am Ausgang des Decodierers DEC wird von dem Ausgangsregister REG ein vierstelliges Steuersignal, das Auswahlsignal AW abgegeben, das dem Schaltwerk SW Zugeführt wird.

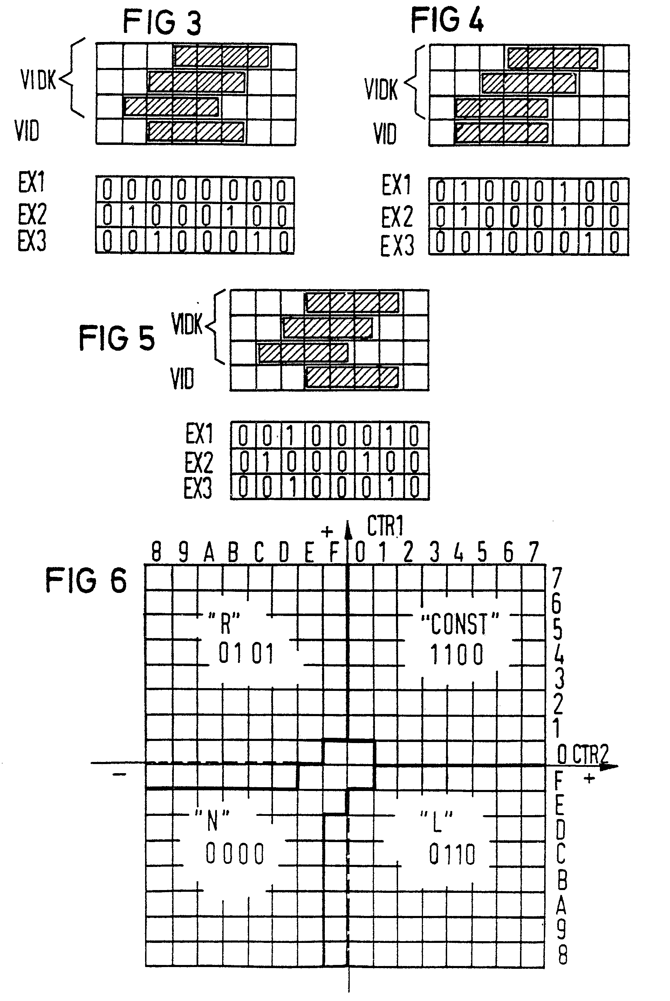

Nachfolgend sei die Funktion der in Fig. 2 dargestellten Schaltungsanordnung anhand der Fig. 3 bis 6 in ihrer Wirkungsweise erläutert. In den Figuren 3, 4 und 5 sind die drei normalerweise auftretenden Kombinationen verschiedener Lagen der zu vergleichenden Bildmuster für ein einfaches Beispiel zum besseren Verständnis dargestellt. In Fig. 3 ist ein einfaches Bildmuster mit vier Bit angedeutet, das in vier Zeilen untereinander gezeichnet ist. Die oberen drei Zeilen sollen die drei um jeweils eine Abtastspalte verschobenen Lagen eines bereits korrigierten Bildmusters VIDk darstellen. In der vierten Zeile ist dazu ein aktuelles Bildmuster VID lagerichtig zu dem mittleren korrelierten Bildmuster eingezeichnet. Diese Lagekombination der verschiedenen Bildmuster entspricht der Definition und sollte im Idealfall auftreten, wenn beim Abtasten des tatsächlichen Bildmusters zwischen der Abtasteinheit ABE und dem abzutastenden Aufzeichnungsträger keine Relativgeschwindigkeit vorliegt.

In drei Zeilen unterhalb dieser Bildmuster sind jeweils die Ausgangssignale der drei EXCLUSIV-ODER-Glieder EX1, EX2 bzw. EX3 der Vergleichsschaltung COMP für diese gezeichneten Lagen dargestellt. Die Signalzustände sind leicht aus den Spaltenrichtung darüber gezeichneten Bildmustern ableitbar.

Nach der Definition werden die beiden Vorwärts-Rückwärts-Zähler CTR1 bzw. CTR2 durch das Ausgangssignal des ersten EXCLUSIV-ODER-Gliedes EX1 in diesem Fall auf eine positive Zählrichtung eingestellt. Sie verwerten also die beiden Zählereignisse in der zweiten und sechsten bzw. der dritte und siebten Spalte jeweils positiv.

Fig. 4 zeigt, bezogen auf die wieder zueinander um eine Spalte verschoben angeordneten korrelierten Bildmuster VIDk, ein nun nicht mehr mittig angeordnetes, sondern nach links verschobenes aktuelles Bildmuster VID. In Spalte 2 bzw. 6 ändern sich daher die Ausgangssignale des ersten EXCLUSIV-ODER-Gliedes EX1. Diese Linksverschiebung ist am Ausgang des zweiten EXCLUSIV-ODER-Gliedes EX2 identisch wiederzufinden. Diese auszuwertenden Zählereignisse werden im ersten Vorwärts-Rückwärts-Zähler CTR1 negativ bewertet. Die Ausgangssignale des dritten EXCLUSIV-ODER-Gliedes EX3 werden dagegen positiv gezählt, Denn Zählereignisse treten dort immer dann auf, wenn das erste EXCLUSIV-ODER-Glied EX1 am Ausgang den Signalzustand "Null" aufweist, d.h. eine positive Zählrichtung des angeschlossenen Zählers festlegt. Fig. 5 zeigt nun den umgekehrten Fall einer Rechtsverschiebung des aktuellen Bildmusters VID gegenüber der mittleren Lage des korrelierten Bildmusters VIDk. Vergleichbar mit der Konfiguration nach Fig. 4 dreht sich hier dann die Zählweise der Vor- Rückwärts-Zähler CTR1, CTR2 um.

In Fig. 6 ist nun bildlich dargestellt, wie diese so zustandegekommenen Zählerstände der beiden Vor-Rückwärts-Zähler CTR1 bzw. CTR2 in dem Decodierer DEC ausgewertet werden. Dieses Diagramm gibt eine bildliche Darstellung des Inhalts des Festwertspeichers ROM des Decodierers DEC. In dem Diagramm sind die Zählerzustände der Vor-Rückwärts-Zähler CTR1 bzw. CTR2 als Koordinatenachsen eingezeichnet. Ein positiver Zählerzustand beider Zähler adressiert in dem Festwertspeicher ROM ein Segment, das in Fig. 6 rechts oben liegt und mit "CONST" bezeichnet ist. Im Zusammenhang mit Fig. 3 wurde erläutert, daß beide Zähler nur dann positiv zählen können, wenn das aktuelle Bildmuster VID mit der Mittenlage des korrelierten Bildmusters VIDk übereinstimmt. In diesem Fall wird im Festwertspeicher ROM eine Binärziffer adressiert, die ebenfalls im angesprochenen Quadranten des Diagramms der Fig. 6 angegeben ist. Diese vierstellige Binärzahl wird in das Ausgangsregister REG des Decodierers DEC—wie beschrieben—übertragen und stellt das Auswahlsignal AW dar. Im Falle dieser ersten Signalkombination stellt das Auswahlsignal AW das Schaltwerk SW so ein, daß das korrelierte Bildsignal VIDk im zweiten Bildspeicher RAM2 nicht verändert wird.

Das zweite Segment links oben, mit "R" bezeichnet, gibt einen Bereich wieder, der einer Rechtsverschiebung entspricht. Das in diesem Fall adressierte Auswahlsignal AW stellt das Schaltwerk SW so ein, daß das aktuelle Bildsignal VID mit dem rechtsverschobenen korrelierten Bildsignal VIDk disjunktiv verknüpft und in den zweiten Bildspeicher RAM2 geschrieben wird. Entsprechendes gilt für eine Linksverschiebung "L" im diagonal gegenüberliegenden Quadranten rechts unten.

Der vierte Quadrant schließlich ist mit "N" bezeichnet. Wie dargestellt soll dieser Bereich auch den Nullpunkt des Koordinatensystems einschließen. Beide Zähler CTR1 bzw. CTR2 weisen nämlich einen Zählerstand "Null" auf, wenn im aktuellen Bildsignal VID keine schwarzen Bildelemente vorliegen. Darüber hinaus werden, wie sich aus der vorstehenden Figurenbeschreibung zu den Figuren 4 und 5 ergibt, die Zählerstände "Null" oder weisen eine negative Zahl auf, wenn keine Übereinstimmung zwischen dem aktuellen und einem korrelierten Signal vorliegt. Dies ist immer dann der Fall, wenn zu einem neuen Bildmuster erstmals ein Bildsignal VID übertragen wird. Die zu diesem Bereich angegebene 4-stellige Binärzahl "0000" stellt das Schaltwerk SW so ein, daß das aktuelle Bildsignal VID unverändert von dem ersten Bildspeicher RAM1 in den zweiten Bildspeicher RAM2 geschrieben wird.

Zusammenstellung der Bezugszeichen

| | |
|---|---|
| ABE | Abtasteinheit |
| VID | Bildsignal |
| T1, T2 | Takte |
| SYNC | Normiersignal |
| CYC | Ausblendsignal |
| UG1 | 1. UND-Glied |
| WR | Schreibsignal |
| SF1 | 1. Synchronisier-Flip-flop |
| RAM1 | 1. Bildspeicher |
| ACTR | Adreßzähler |
| SF2 | 2. Synchronisier-Flipflop |
| SW | Schaltwerk |
| SD1 . . . 4 | Dateneingänge des Schaltwerks |
| VCTR | Bildelement-Zähleinrichtung |
| GN | Zähleingang der Bildelement-Zähleinrichtung |
| BI | Schwellensignal der Bildelement-Zähleinrichtung |
| AW | Auswahlsignal |
| DEC | Decodierer |
| SD5 | Datenausgang des Schaltwerkes |
| RAM2 | Zweiter Bildspeicher |
| ADD | Adressaddierer |
| SF3 | 3. Synchronisier-Flipflop |
| VIDk | Korreliertes Bildsignal |
| VF1, VF2 | Vergleichsschaltung |
| C5 | Zählschaltung |

| | |
|---|---|
| DEC | Decodierer |
| COMP | Vergleichsschaltung |
| UG2 | 2. UND-Glied |
| VF1', VF2' | Weiteres Verzögerungs-flipflop für korreliertes Bildsignal |
| EX1, EX2, EX3 | EXCLUSIV-ODER-Glieder |
| CT | Zählschaltung |
| CTR1 | 1. Vorwärts-Rückwärts-Zähler |
| CTR2 | 2. Vorwärts-Rückwärts-Zähler |
| EN | Zähleingang |
| SF4 | 4. Synchronisier-Flipflop |
| $\overline{\text{EN}}$ | Sperreingang |
| DEC | Decodierer |
| ROM | Festwertspeicher |
| REG | Ausgangsregister |
| UG3 | 3. UND-Glied |

## Patentansprüche

1. Schaltungsanordnung zum Aufbereiten von Mustern in einer Einrichtung zur maschinellen Zeichenerkennung, bei der die Muster mittels einer als zweidimensionale Fotodiodenmatrix ausgebildeten und in einer Relativbewegung zu einem die Muster tragenden Aufzeichnungsträger befindlichen Abtasteinheit abgetastet und in digitalisierte Bildsignale umgewandelt werden, unter Verwendung eines ersten Bildspeichers für das jeweils aktuell abgetastete Bildmuster und eines zweiten Bildspeichers, in dem ein jeweils dazu korreliertes Bildmuster gespeichert ist, wobei die Bildsignale des zweiten Bildspeichers mit den aktuellen Bildsignalen verglichen werden und in einer Zähleinrichtung die Größe der Übereinstimmung beider Bildsignale in Form eins Zählwertes ermittelt wird, der die weitere Verarbeitung der Bildsignale steuert, gekennzeichnet durch eine Bildelement-Zähleinrichtung (VCTR), die für jedes in dem ersten Bildspeicher (RAM1) zwichenzuspeichernde aktuelle Bildsignal (VID) parallel zum Einschreiben die Schwarzelemente zählt und erst bei einem Zählerstand oberhalb eines vorgegebenen Schwellenwertes mit einem Ausgangssignal (BI) im Zustand "1" ein "fettes" Abtastmuster kennzeichnet, durch ein Schaltwerk (SW), das zwischen dem ersten und dem zweiten Bildspeicher angeordnet und an den Ausgang der Bildelement-Zähleinrichtung angeschlossen ist, mit dem lagesynchron die einander entsprechenden Musterelemente beider Speicherinhalte disjunktiv verknüpfbar sind, wobei dazu, abhängig vom Zustand des Ausgangssignales der Bildelement-Zähleinrichtung, bei schwachen Zeichen, die schwarzen Bildelemente, bei fetten Zeichen jedoch die weißen Bildelemente herangezogen werden und mit dem Ergebnis der Inhalt des zweiten Bildspeichers überschrieben wird.

2. Schaltungsanordnung nach Anspruch 1 mit einer zeilenweise bitseriellen Vorverarbeitung der Abtastmuster, dadurch gekennzeichnet, daß zum Ausgleichen der Lageverschiebung der in den beiden Bildspeichern (RAM1 bzw. RAM2) zwischengespeicherten Bildmuster ein synchron zum von der Abtasteinheit (ABE) ausgegebenen, aktuellen Bildsignal (VID) laufender Adressenzähler (ACTR) vorgesehen ist, der vor Beginn der Übertragung eines Bildmusters in den ersten Bildspeicher zurückgesetzt wird, daß mit dem Inhalt dieses Zählers der erste Bildspeicher direkt adressiert wird und daß an den Ausgang dieses Zählers ein den zweiten Bildspeicher adressierender Adressaddierer (ADD) angeschlossen ist, in dem beim Lesevorgang zu der Zugeführten Adresse des ersten Bitspeichers eine Konstante addiert wird, die die Lageverschiebung der Bildmuster in Zeilenrichtung eliminiert.

3. Schaltungsanordnung nach Anspruch 2, gekennzeichnet durch zwei zwischen dem zweiten Bildspeicher (RAM2) und dem Schaltwerk (SW) angeordnete Verzögerungs-Flip-Flops (VF1 und VF2), so saß dem Schaltwerk das ausgelesene, korrelierte Bildsignal (VIDk) in bezug auf das aktuelle Bildsignal (VID) in drei, zueinander um je einen Spaltenabstand versetzten Lagen angeboten wird, wobei die im Adressaddierer (ADD) zu der angebotenen Adresse addierte Konstante derart gewählt ist, daß das in der mittleren Lage angebotene korrelierte Bildsignal bei Stillstand der Abtasteinheit (ABE) gegenüber dem Aufzeichnungsträger lagesynchron zu dem aktuellen Bildsignal auftritt.

4. Schaltungsanordnung nach Anspruch 3, gekennzeichnet durch eine dem Schaltwert (SW) zugeordnete Vergleicherschaltung (COMP), der das aktuelle Bildsignal (VID) direkt und das korrelierte Bildsignal (VIDk) wiederum in den drei Lagen zugeführt wird und die das aktuelle Bildsignal mit den drei korrelierten Bildsignalen logisch verknüpft, um jeweils den Grad der Übereinstimmung festzustellen, durch eine an die Vergleicherschaltung angeschlossene Zählschaltung (CT) mit zwei Zählern (CTR1 bzw. CTR2) zum Zählen der Ergebnisse bei einem Mitte/Links-bzw. einem Mitte/Rechts-Vergleich und durch eine an die Zählschaltung angeschlossene Decodierschaltung (DEC), die aus den Zählerständen die beste Übereinstimmung und damit auch die Abtastrichtung ermittelt und über Auswahlsignale (AW) das Schaltwerk (SW) derart steuert, daß es die mit dem aktuellen Bildsignal am besten übereinstimmende Lage des korrelierten Bildsignales für die disjunktive Verknüpfung mit diesem heranzieht.

5. Schaltungsanordnung nach Anspruch 4, bei der die Konturen der Abtastmuster bevorzugt ausgewertet werden, gekennzeichnet durch eine Vergleicherschaltung (COMP) mit zwei weiteren Verzögerungsflipflops (VF1' bzw. VF2'), die hintereinandergeschaltet das zugeführte korrelierte Bildsignal (VIDk) um je einen Takt (T2) verzögern, mit einem weiteren Verzögerungsflipflop (VF3'), dem das aktuelle Bildsignal (VID) zugeführt wird und mit drei EXCLUSIV-ODER-Gliedern (EX1 bis EX3), von denen dem ersten das verzögerte aktuelle Bildsignal (VID), dem zweiten einmal das nichtverzögerte korrelierte Bildsignal·und dem dritten das zweimal verzögerte korrelierte Bildsignal über den einem Eingang zugeführt werden, während die zweiten Eingänge gemeinsam an den Ausgang des ersten Verzögerungsflipflops angeschlossen sind.

6. Schaltungsanordnung nach Anspruch 5, gekennzeichnet durch eine Zählschaltung (CT) mit zwei Vor-Rückwärts-Zählern (CTR1 bzs. CTR2), deren Eingänge für die Zählrichtung ("+", "−") mit dem Ausgang des ersten EXCLUSIV-ODER-Gliedes (EX1) derart verbunden sind, daß nur das bei Übereinstimmung zwischen dem aktuellen Bildsignal (VID) und dem korrelierten Bildsignal (VIDk)—in der mittleren Lage—abgegebene Ausgangssignal eine positive Zählrichtung festlegt und deren Zähleingang (EN) jeweils mit dem Ausgang des zweiten bzw. dritten EXCLUSIV-ODER-Gliedes (EX2 bzw. EX3) verbunden ist.

7. Schaltungsanordnung nach Anspruch 6, gekennzeichnet durch eine Decodierschaltung (DEC), mit einem Ausgangsregister (REG), in das jeweils am Ende einer Bildübertragung Auswahlsignale (AW) für das Schaltwert (SW) aus einem Festwertspeicher (ROM) bereitgestellt werden, wobei die Zählerstände der Vor-Rückwärts-Zähler (CTR1, CTR2) den Festwertspeicher derart adressieren, daß bei positiven Zählerständen beider Zähler, also bei Übereinstimmung von aktuellem Bildsignal (VID) mit der Mittenlage des korrelierten Bildsignales (VIDk), mit dem Auswahlsignal das Schaltwerk so eingestellt wird, daß das korrelierte Bildsignal unverändert erhalten bleibt, daß bei Zählerständen mit unterschiedlicher Zählrichtung, also bei einer Links- oder Rechtsverschiebung des aktuellen Bildsignals, dieses mit dem entsprechend verschobenen korrelierten Bildsignal im Schaltwerk disjunktiv verknüpft wird und daß bei negativen Zählerständen beider Zähler, also bei mangelnder Übereinstimmung, das aktuelle Bildsignal über das Schaltwerk unverändert aus dem ersten in den zweiten Bildspeicher (RAM1 bzw. RAM2) übertragen wird (Fig. 6).

## Claims

1. Circuit arrangement for the processing of samples in a mechanical character recognition device, wherein the samples are scanned by means of a scanning unit which is designed as a two-dimensional photo-diode matrix and which is in relative movement with a data carrier which carries the samples, and are converted into digitalised image signals, employing a first image store which stores a correlated image which is currently being scanned, and a second image store which sotes a correlated image pattern, wherein the image signals of the second image store are compared with the current image signals, and in a counting device the extent of the conformity between the two image signals is determined in the form of a numerical value which controls the further processing of the image signals, characterised by an image element counting device (VCTR) which, for each current image signal (VID) which is to be intermediately stored in the first image store (RAM1) counts the black elements parallel to recording, and only when a count above a predetermined threshold value has been reached, characterises a "fat" scan pattern by an output signal (BI) in the state "1", further characterised by a switching unit (SW) which is arranged between the first and second image stores and is connected to the output of the image element counting device, by which the sample elements, which correspond to one another, of the two store contents may be disjunctively logic-linked position synchro-nously, wherein for this purpose, in dependence upon the state of the output signal of the image element counting device, in the case of weak characters the black image elements are used and in the case of fat characters the white image elements are used and the result serves to over-write the contents of the second image store.

2. Circuit arrangement as claimed in Claim 1 comprising row-wise bit-serial preliminary processing of the scan samples, characterised in that in order to balance out the position shift of the image patterns intermediately stored in the two image stores (RAM1 and RAM2), an address counter (ACTR) is provided with runs in synchronism with the current image signal (VID) emitted from the scanning unit (ABE) and which is reset prior to the start of the transfer of an image pattern into the first image store, that the first image store is directly addressed by the content of this counter, and that the output of this counter is connected to an address adder (ADD) which addresses the second image store and which, during the read-out process, a constant which serves to eliminate the position shift of the image patterns in the row direction is added to the supplied address of the first bit store.

3. Circuit arrangement as claimed in Claim 2, characterised by two delay flip-flops (VF1 and VF2) which are arranged between the second image store (RAM2) and the switching unit (SW), so that the switching unit is presented with the read-out, correlated image signal (VIDk) relative to the current image signal (VID) in the three positions offset from one another by a column spacing, where the constant which is added to the presented address in the address adder (ADD) is selected to be such that when the scanning unit (ABE) is stationary relative to the data carrier, the correlated image signal presented in the central position occurs in position-synchronism to the current image signal.

4. Circuit arrangement as claimed in Claim 3, characterised by a comparator circuit (COMP) which is assigned to the switching unit (SW) and which is supplied with the current image signal (VID) directly and with the correlated image signal (VIDk) again in the three positions, and which logic-links the current image signal with the three correlated image signals in order to establish the extent of the identity, further characterised by a counting circuit (CT) which is connected to the comparator circuit and which comprises two counters (CTR1 and CTR2) which serve to count the results in the event of a centre/left or a centre/right comparison, and further characterised by a decoder circuit (DEC) which is connected to the counting circuit and which determines the best identity and thus also the scanning direction on the basis of the counts and, via selection signals (AW), controls the switching unit (SW) in such manner that it uses that position of the correlated image signal which best conforms with the current image signal for the disjunctive logic-linking to the latter.

5. Circuit arrangement as claimed in Claim 4, wherein the contours of the scan patterns are preferably analysed, . characterised by a comparator circuit (COMP) comprising two further delay flip-flops (VF1' and VF2') which, connected in series, each delay the supplied correlated image signal (VIDk) by one clock pulse (T2), comprising a further delay flip-flop (VF3') which is supplied with the current image signal (VID), and comprising three EXCLUSIVE-OR gates (EX1 to EX3), the first of which is supplied with the delayed current image signal (VID), the second of which is supplied with the non-delayed correlated image signal, and the third of which is supplied with the twice delayed correlated image signal via one input, whereas the second inputs are commonly connected to the output of the first delay flip-flop.

6. Circuit arrangement as claimed in Claim 5, characterised by a counting circuit (CT) comprising two forwards-backwards counters (CTR1 and CTR2) whose inputs for the counting direction "+", "−" are connected to the output of the first EXCLUSIVE-OR gate (EX1) in such manner that only that output signal which is emitted—in the central position—in the event of conformity between the current image signal (VID) and the correlated image signal (VIDk) determines a positive counting direction, and whose counting input (EN) is in each case connected to the output of the second or third EXCLUSIVE-OR gate (EX2 and EX3).

7. Circuit arrangement as claimed in Claim 6, characterised by a decoder circuit (DEC), comprising an output register (REG) to which, at the end of an image transfer, selection signals (AW) for the switching unit (SW) are presented from a ROM, where the counts of the forwards-backwards counters (CTR1, CTR2) address the ROM in such manner that when the counts of the two counters are positive, thus in the event of conformity between the current image signal (VID) and the central position of the correlated image signal (VIDk), the selection signal sets the switching unit in such manner that the correlated image signal remains unchanged, that in the event of counts with different counting directions, thus in the event of a left-hand or right-hand shift of the current image signal, the latter is disjunctively logic-linked to the correspondingly displaced correlated image signal in the switching unit, and that when the counts of the two counters are negative, thus in the event of lack of conformity, the current image signal is transferred unchanged via the switching unit from the first to the second image store (RAM1 and RAM2). (Fig. 6).

**Revendications**

1. Montage pour éditer des modèles dans une installation servant à l'identification de caractères, du type dans lequel les modèles sont balayés à l'aide d'une unité de balayage réalisée sous la forme d'une matrice bidimensionnelle de photodiodes et déplaçable relativement à un support d'enregistrement portant les modèles, et sont transformés en signaux d'images numérisés, avec mise en oeuvre d'une première mémoire d'image pour le modèle d'image actuel qui est effectivement balayé et d'une seconde mémoire d'image dans laquelle est mémorisé un modèle d'image en corrélation avec le précédent, les signaux d'images de la seconde mémoire d'image étant comparés avec les signaux d'image actuels et l'importance de la concordance des deux signaux d'image étant établie dans un dispositif de comptage sous la forme d'une valeur de comptage, caractérisé par un dispositif de comptage des éléments d'image (VCTR) qui compte pour chaque signal d'image actuel (VID) à mémoriser de façon intermédiaire dans la première mémoire d'image (RAM1), et parallèlement à l'inscription, les éléments noirs et ne caractérise qu'un état de comptage situé au-dessus d'une valeur de seuil, un modèle de balayage "gras" avec un signal de sortie (BI) ayant l'état "1", par une logique séquentielle (SW) disposée entre la première et la seconde mémoires d'images, reliée à la sortie du dispositif de comptage des éléments d'image et à l'aide de laquelle les éléments de modèle correspondants des deux contenus des mémoires sont susceptibles d'être combinés disjonctivement et en synchronisme de position, alors qu'à cet effet et en fonction de l'état du signal de sortie du dispositif de comptage des éléments d'image, on utilise des éléments d'image noirs pour des signes faibles et des éléments d'image blancs pour des signes gras et qu'avec le résultat on surcharge le contenu de la seconde mémoire d'image.

2. Montage selon la revendication 1, à préexploitation ligne par ligne et en série par bit, caractérisé par le fait que pour compenser le décalage de position des modèles d'images mémorisés temporairement dans les deux mémoires d'images (RAM1, RAM2), il est prévu un compteur d'adresses (ACTR) opérant en synchronisme avec le signal d'image actuel (VID) émis par l'unité de balayage (ABE) et remis dans son état initial avant le début du transfert d'un modèle d'image dans la première mémoire d'image, qu'à l'aide du contenu de ce compteur est adressée directement la première mémoire d'images et qu'à la sortie de ce compteur est relié un additionneur d'adresses (ADD) adressant la seconde mémoire d'images et dans lequel est additionnée, lors de la lecture, une constante à l'adresse appliquée de la première mémoire d'images, ladite constante éliminant le décalage de position des modèles d'images dans la direction les lignes.

3. Montage selon la revendication 2, caractérisé par deux multivibrateurs bistables retardateurs (VF1 et VF2) disposés entre la seconde mémoire d'images (RAM2) et la logique séquentielle (SW) pour qu'à cette dernière le signal d'image corrélé (VIDk) soit offert suivant trois positions décalées entre elles de la distance d'une colonne, par rapport au signal d'image actuel, la constante ajoutée dans l'additionneur d'adresses à l'adresse offerte étant choisie de telle manière que le signal d'image corrélé, offert en position médiane, se présente, à l'arrêt de l'unité de balayage (ADE) par rapport au support d'enregistrement, en synchronisme de position avec le signal d'image actuel.

4. Montage selon la revendication 3, caractérisé par un circuit comparateur (COMP) associé à la logique séquentielle (SW) et auquel on applique le signal d'image actuel (VID) directement et le signal d'image corrélé (VIDk) à nouveau dans les trois états, ladite logique séquentielle combinant logiquement le signal d'image actuel avec les trois signaux d'images corrélés en vue de déterminer le degré de concordance, par un circuit de comptage (CT) relié au circuit comparateur et constitué par deux compteurs (CTR1 et CTR2), en vue de compter les résultats lors d'une comparaison milieu/gauche ou milieu/droit, et par un circuit de décodage (DEC) relié au circuit de comptage et qui détermine, á partir des états de comptage, la meilleure concordance et, par voie de conséquence, la direction de balayage, et qui commande, par l'intermédiaire des signaux de sélection (AW) la logique séquentielle de manière qu'elle utilise pour la combinaison disjonctive la position du signal d'image corrélé qui concorde le mieux avec le signal d'image actuel.

5. Montage selon la revendication 4, dans lequel on évalue de préférence le contour des modèles à balayer, caractérisé par un circuit comparateur (COMP) comportant deux multivibrateurs bistables retardateurs supplémentaires (VF1' et VF2') qui sont montés en série et qui retardent d'une cadence (T2) le signal d'image corrélé appliqué (VIDk), un autre multivibrateur bistable retardateur supplémentaire (VD3') auquel on applique le signal d'image actuel (VID) et trois circuits OU-EXCLUSIF (EX1 à EX3) dont le premier reçoit l'image actuelle retardée (VID) dont le second reçoit le signal d'image corrélé non retardé et dont le troisième reçoit le signal d'image corrélé retardé deux fois, par une entrée, alors que les secondes entrées sont reliées en commun à l'entrée du premier multivibrateur bistable retardateur.

6. Montage selon la revendication 5, caractérisé par un circuit de comptage (CT) à deux compteurs reversibles (CTR1 et CTR2) dont les entrées pour le sens de comptage ("+", "−") sont reliées à la sortie du premier circuit OU-EXCLUSIF (EX1) de manière que seul le signal de sortie émis lors de la concordance entre le signal d'image actuel (VID) et le signal d'image corrélé (VIDk)—en position médiane—détermine le sens de comptage positif, et dont les entrées de comptage (EN) sont reliées respectivement à la sortie du second et du troisiéme circuits OU-EXCLUSIF (EX2, EX3).

7. Montage selon la revendication 6, caractérisé par un circuit de décodage (DEC) comportant un registre de sortie (REG), dans lequel sont disponibles, à la fin d'une transmission d'image, des signaux de sélection (AW) pour la logique séquentielle (SW), à partir d'une mémoire morte (ROM), les états de comptage des compteurs bidirectionnels (CTR1, CTR2) adressant la mémoire morte de telle manière que lors-que les états de comptage des compteurs sont positifs, donc s'il y a concordance entre le signal d'image actuel (VID) et la position médiane du signal d'image corrélé (VIDk) la logique séquentielle est réglée par le signal de sélection pour que le signal d'image corrélé soit maintenu sans modification, que lorsque les états de comptage ont des sens de comptage différents, donc si le signal d'image actuel est décalé vers la gauche ou vers la droite, il est combiné disjonctivement dans la logique séquentielle avec le signal d'image corrélé et décalé de façon correspondante, et que lorsque les deux compteurs ont tous deux des états de comptage négatifs, donc s'il y a absence de concordance, le signal d'image actuel est transmis, par l'intermédiaire de la logique séquentielle, de la première mémoire d'images dans la seconde (RAM1, RAM2).

FIG 1

# FIG 2

FIG 3

VIDK

VID

EX1
EX2
EX3

FIG 4

VIDK

VID

EX1
EX2
EX3

FIG 5

VIDK

VID

EX1
EX2
EX3

FIG 6

CTR1

CTR2

"R"
0101

"CONST"
1100

"N"
0000

"L"
0110